# EUROPEAN PATENT APPLICATION

(11) **EP 4 687 372 A1**
(43) Date of publication of application: **04.02.2026**
(21) Application number: 25192142.5
(22) Date of filing: 28.07.2025
(51) Int. Cl.: H05B 47/105, H05B 47/115, H05B 47/13, H05B 47/175

(54) **LIGHTING SYSTEM, METHOD FOR CONTROLLING LIGHTING DEVICE, AND LIGHTING CONTROL DEVICE**

(30) Priority: 29.07.2024 JP 2024122252
(71) Applicant: Minebea Mitsumi Inc., Kitasaku-gun, Nagano 3890293 (JP)
(72) Inventor: IWAMOTO, Kazuyuki, Kitasaku-gun, Nagano, 389-0293 (JP)
(74) Representative: Winter, Brandl - Partnerschaft mbB

(57) **Abstract**

A lighting system 10 includes a lighting device configured to adjust an irradiation state including at least one of an irradiation direction or a focal length and irradiate an irradiation region with light, a control device 500 configured to control the irradiation state of the lighting device, and a sensor 102 configured to detect presence or absence of a person in each of a plurality of detection regions. The control device specifies, based on a detection result of the sensor and a position detection model with a manned region learned in advance as a region where a person is present among the plurality of detection regions, irradiation state data specifying the irradiation state corresponding to the position detection model and controls the irradiation state to the irradiation region based on the irradiation state data.

## Description

### Technical Field

The present invention relates to a lighting system, a method for controlling a lighting device, and a lighting control device.

### Background Art

In general, there is known a technique of detecting the presence or absence of a person in a lighting space and controlling the irradiation direction, the light amount, and the like of a lighting device (for example, see Patent Documents 1 to 3).

### Citation List

### Patent Literature

Patent Document 1: JP 2022-61080 A
Patent Document 2: JP 2012-28015 A
Patent Document 3: JP 2021-184346 A

### Summary of Invention

### Technical Problem

In the technique of detecting the presence or absence of a person in a lighting space and controlling the irradiation direction, the light amount, and the like of a lighting device, control more suited for the situation needs to be performed by increasing detection accuracy of a position of a person.

The present invention is directed to the above-described problem as an example, and an object of the present invention is to provide a technique of controlling a lighting device more suited for the situation by increasing the detection accuracy of the position of a person.

### Solution to Problem

To solve the above problem, a lighting system according to the present invention includes a lighting device configured to adjust an irradiation state including at least one of an irradiation direction or a focal length and irradiate an irradiation region with light; a control device configured to control the irradiation state of the lighting device; and a sensor configured to detect presence or absence of a person in each of a plurality of detection regions. The control device specifies, based on a detection result of the sensor and a position detection model with a manned region learned in advance as a region where a person is present among the plurality of the detection regions, irradiation state data specifying the irradiation state corresponding to the position detection model and controls the irradiation state to the irradiation region based on the irradiation state data.

### Advantageous Effects of Invention

The lighting system of the present invention can control the lighting device more suited for the situation by increasing the detection accuracy of the position of the person.

### Brief Description of Drawings

FIG. 1 is a functional block diagram schematically illustrating a configuration of a lighting system according to an embodiment of the present invention.
FIG. 2 is a perspective view illustrating a lighting device included in the lighting system according to the embodiment.
FIG. 3 is a schematic view illustrating an example of a lighting space where the lighting system according to the embodiment is installed.
FIG. 4 is a schematic view illustrating an example of an irradiation state realized by a position detection model and irradiation state data in the lighting space where the lighting system according to the embodiment is installed.
FIG. 5 is a schematic view illustrating an example of processing for generating a position detection model by a control device according to the embodiment.
FIG. 6 is a schematic view illustrating another example of processing for generating a position detection model by the control device according to the embodiment.
FIG. 7 is a schematic view illustrating an example of weighting processing of a position detection model performed by the control device according to the embodiment.
FIG. 8 is a flowchart illustrating an example of a lighting control method executed by control device according to the embodiment.
FIG. 9 is a flowchart illustrating an example of processing for generating a position detection model executed by the control device according to the embodiment.

### Description of Embodiments

### 1. Overview of Embodiments

First, an overview of representative embodiments of the invention disclosed in the present application will be described. Note that, in the following description, as an example, reference signs in the drawings corresponding to components of the present invention are indicated in parentheses.

A first aspect of the present invention provides a lighting system 10 including a lighting device 1 configured to adjust an irradiation state including at least one of an irradiation direction or a focal length and irradiate an irradiation region with light, a control device 500 configured to control the irradiation state of the lighting device, and a sensor 102 configured to detect presence or absence of a person in each of a plurality of detection regions, wherein the control device specifies, based on a detection result of the sensor and a position detection model with a manned region learned in advance as a region where a person is present among the plurality of detection regions, irradiation state data specifying the irradiation state corresponding to the position detection model and controls the irradiation state to the irradiation region based on the irradiation state data.

In an embodiment of the lighting system, the manned region includes a region different from the irradiation region.

In a further embodiment of the lighting system, the sensor detects presence or absence of a person in each of the plurality of the detection regions based on a temperature change, the manned region includes a plurality of the detection regions, and the control device calculates information indicating a weight of the temperature change for each of the plurality of the detection regions included in the manned region and generates the position detection model by associating the plurality of the detection regions included in the manned region with the information indicating the weight of the temperature change.

In a further embodiment of the lighting system, the control device calculates an average value of the temperature change for each of the plurality of the detection regions included in the manned region and calculates the information indicating the weight of the temperature change based on the average value.

In a further embodiment of the lighting system, the irradiation state includes any one of a light distribution angle, brightness, and a light color.

A second aspect of the present invention provides a method for controlling a lighting device 1, the method including controlling, by a control device 500, an irradiation state including at least one of an irradiation direction or a focal length of a lighting device configured to adjust the irradiation state and irradiate an irradiation region with light, wherein the control device specifies, based on a detection result of presence or absence of a person in each of a plurality of detection regions of a sensor and a position detection model with a manned region learned in advance as a region where a person is present among the plurality of the detection regions, irradiation state data specifying the irradiation state corresponding to the position detection model and controls the irradiation state to the irradiation region based on the irradiation state data.

A third aspect of the invention provides a lighting control device 500 for controlling a lighting device 1 configured to adjust an irradiation state including at least one of an irradiation direction or a focal length and irradiate an irradiation region with light, wherein the control device specifies, based on a detection result of presence or absence of a person in each of a plurality of detection regions of a sensor and a position detection model with a manned region learned in advance as a region where a person is present among the plurality of the detection regions, irradiation state data identifying the irradiation state corresponding to the position detection model and controls the irradiation state to the irradiation region based on the irradiation state data.

### 2. Specific Examples of Embodiments

A lighting system, a method for controlling a lighting device, and a lighting control device according to an embodiment of the present invention will be described below with reference to the drawings.

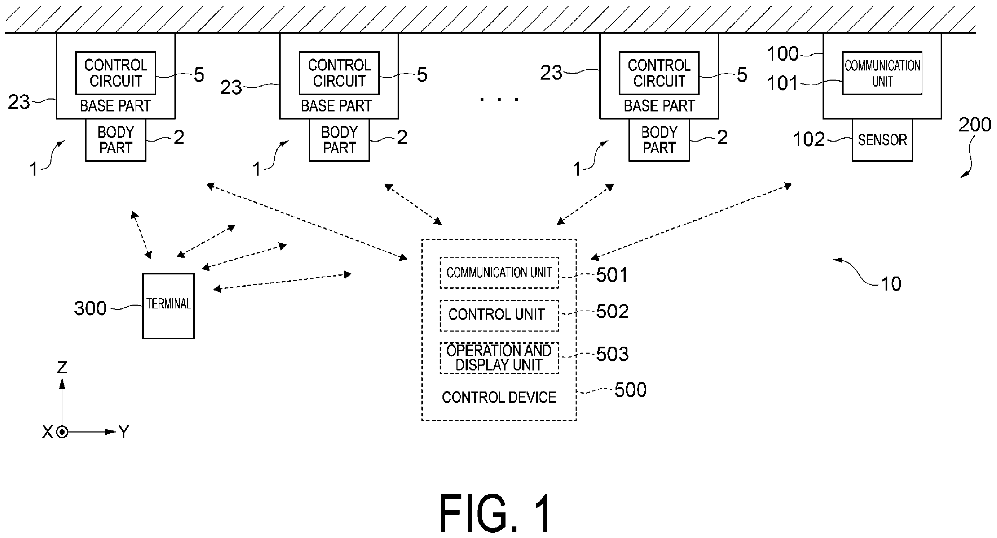

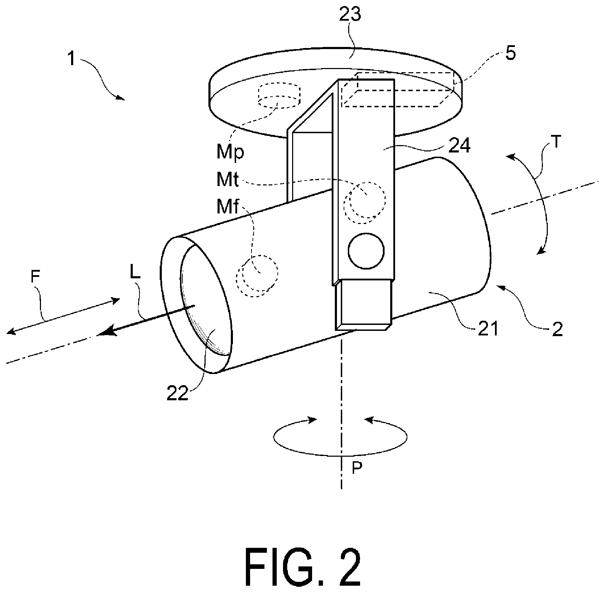

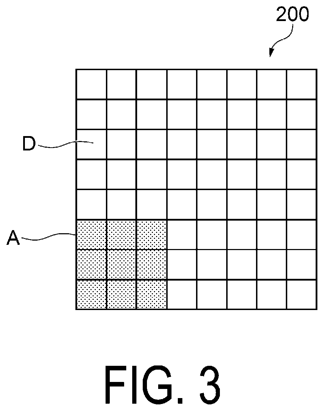

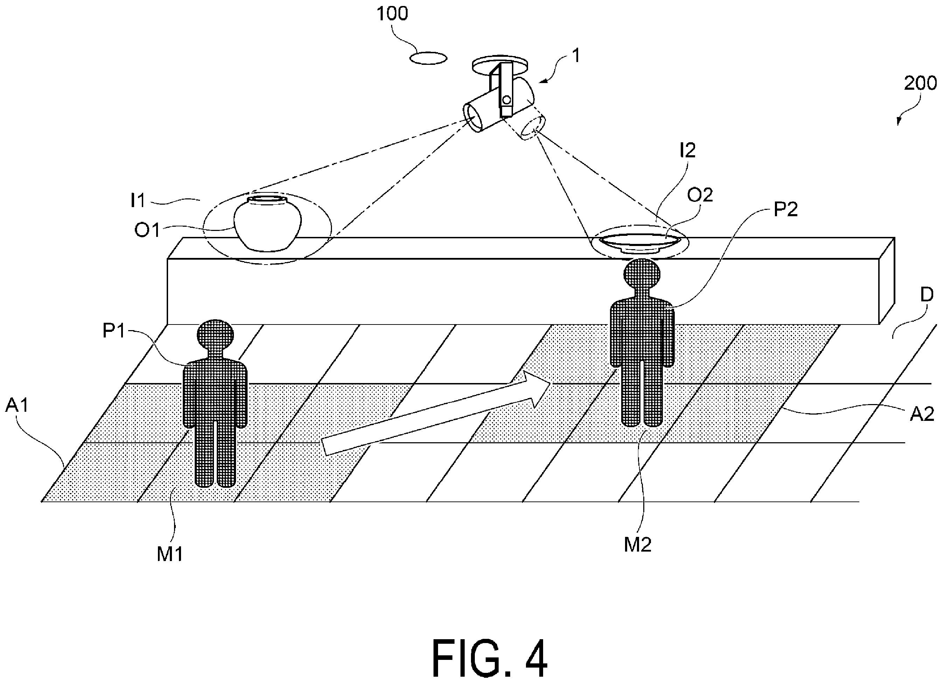

FIG. 1 is a functional block diagram schematically illustrating a configuration of a lighting system 10 according to an embodiment of the present invention. FIG. 2 is a perspective view illustrating a lighting device 1 included in the lighting system 10. FIG. 3 is a schematic view illustrating an example of a lighting space 200 where the lighting system 10 is installed. FIG. 4 is a schematic view illustrating an example of irradiation states I1 and I2 realized by position detection models A1, A2 and irradiation state data in the lighting space 200 where the lighting system is installed.

As illustrated in FIG. 1, the lighting system 10 includes the lighting device 1, a lighting control device (hereinafter referred to as "control device 500"), and a sensor device 100. The lighting system 10 is installed in the lighting space 200, and the like in a store or an exhibition hall as illustrated in FIGS. 3 and 4. In the lighting system 10, the control device 500 controls the irradiation state of the lighting device 1, such as the irradiation angle, the focal length, the light distribution angle, the light color (including the color temperature), and the brightness to irradiation targets O1 and O2, such as an exhibit and a piece of furniture in the lighting space 200, of the lighting device 1 for irradiating the irradiation targets with light based on the information acquired from the sensor device 100 and the information generated in advance. A terminal 300 is an apparatus having an MCU, a communication function, and the like, such as a smartphone, a tablet terminal, and a personal computer (PC). The terminal 300 can communicate with the control device 500 and the lighting device 1 by the communication function. The terminal 300 can communicate with the sensor device 100 by the communication function. Note that the terminal 300 may be an electronic apparatus having a communication function where a predetermined button operation and an output signal are associated with each other, such as a remote control device.

As illustrated in FIGS. 1 and 2, the lighting device 1 includes a body part 2 and a control circuit 5. The body part 2 includes a casing 21, a lens 22, a base part 23, and an arm 24.

The casing 21 houses components of the lighting device 1 including a light source formed of, for example, a light emitting device (LED), a reflector, and the like (not illustrated), and holds the lens 22 in an opening part. The light source can control at least one of the color (including the color temperature) and the brightness of light by controlling the lighting state of the LED, for example. The casing 21 houses a focus motor Mf. The focus motor Mf moves the position of the lens 22 to be able to adjust at least one of the focal length from the body part 2 and the light distribution angle (arrow F).

The base part 23 is connected to, for example, a ceiling or a wall of the lighting space 200. The base part 23 holds the arm 24 fixed to the lower side. The base part 23 accommodates a pan motor Mp and the control circuit 5. The base part 23 is configured to be rotatable to the left and right by the pan motor Mp. By the rotation of the pan motor Mp, an irradiation angle L of the light from the body part 2 can be panned to the left and right (arrow P).

The arm 24 holds the casing 21 on the base part 23. The arm 24 is provided with a tilt motor Mt enabling the casing 21 attached to the arm 24 to rotate in the vertical direction. The irradiation angle L of the light from the casing 21 can be tilted vertically (arrow T) by the rotation of the tilt motor Mt.

The control circuit 5 is realized by a computer such as a micro computer realized by a processor such as a micro control unit (MCU) (not illustrated) and a calculation memory such as a random access memory (RAM). The MCU is an arithmetic device realizing various functions as the control circuit 5 to be described below, by executing arithmetic processing of a program. The memory is a volatile memory where a program to be arithmetically processed by the MCU is stored. The control circuit 5 stores function programs stored in a storage unit (not illustrated) in the memory. The function programs stored in the storage unit are programs for realizing various functions of the control circuit 5 in this embodiment. Among the function programs, programs corresponding to functions to be realized are sequentially stored in the memory and sequentially executed by the MCU. The program is configured by a function, a fixed value, and the like corresponding to a function. When executing a program, not only a function but also data as a fixed value is required.

The control circuit 5 realizes a communication function, a motor control function, and a light source control function to be described below, by the hardware configuration and the program described above. The control circuit 5 realizes, as the communication function, a function of receiving control information of the lighting device 1 transmitted from the control device 500. As the motor control function, the control circuit 5 variably controls the rotation amount and the rotation direction of each of the pan motor Mp, the tilt motor Mt, and the focus motor Mf described above according to the control information of the lighting device 1 received from the control device 500, and controls the focal length, the irradiation direction, and the light distribution angle of the lighting device 1. The control circuit 5 controls at least one of the color (including the color temperature) and the brightness of light by controlling the lighting state of the light source (LED) described above according to the control information of the lighting device 1 received from the control device 500.

As illustrated in FIG. 1, the sensor device 100 includes a communication unit 101 and a sensor 102. The communication unit 101 transmits the information detected by the sensor 102 to the control device 500 by, for example, wireless communication. The sensor 102 is, for example, an infrared sensor composed of a plurality of micro electro mechanical systems (MEMS) elements detecting a temperature change in a detection region D (refer to FIG. 3). The sensor 102 can detect the presence or absence of a person in each of the detection regions by detecting heat (infrared rays) emitted by a person, an object, or the like in each of the plurality of detection regions.

The control device 500 is an example of a computer such as a micro computer realized by a processor such as a micro control unit (MCU) (not illustrated), a calculation memory such as a random access memory (RAM), and a storage unit storing programs and processing data. The MCU is an arithmetic device realizing various functions as the control device 500 to be described below, by executing arithmetic processing of a program. The memory is a volatile memory where a program to be arithmetically processed by the MCU is stored. The control device 500 stores function programs stored in a storage unit (not illustrated) in the memory. The function programs stored in the storage unit are programs for realizing various functions of the control device 500 in this embodiment. Among the function programs, programs corresponding to functions to be realized are sequentially stored in the memory and sequentially executed by the MCU. The program is configured by a function, a fixed value, and the like corresponding to a function. When executing a program, not only a function but also data as a fixed value is required.

The storage unit is realized by, for example, a nonvolatile memory, such as an electrically erasable programmable read-only memory (EEPROM). The storage unit stores function programs for realizing various functions. The storage unit stores various processing data used by the control device 500, for example, data of a position detection model and irradiation state data to be described later, control information of the lighting device 1, and the like.

The control device 500 configures functional blocks such as a communication unit 501, a control unit 502, and an operation and display unit 503 by the hardware configuration and the programs described above.

The communication unit 501 can communicate with external devices, that is, the lighting device 1 and the sensor device 100, for example, by wireless or wired communication, by the above-described configuration included in the control device 500, a communication interface (not illustrated), and the like. The communication unit 501 can also communicate with the terminal 300 such as a smartphone.

The operation and display unit 503 is an input interface for a user to operate the lighting device 1 via the control device 500, and an output interface for a user to perceive the control state of the control device 500 and the lighting device 1.

Examples of the hardware configuration for realizing the operation unit in the operation and display unit 503 include various touch panels, keyboards, numeric keys, buttons, and the like. For example, a user can set the control state of the lighting device 1 via the control device 500 by operating the operation and display unit 503. Note that the hardware configuration realizing the operation unit is not limited to the above-described example, and may have a function capable of receiving an input for the user to operate the control device 500. The operation unit may receive an operation by a command of various communication interfaces via the communication unit 501, or may receive an operation by a command input by voice, for example.

A hardware configuration for realizing the display unit in the operation and display unit 503 is a functional unit for allowing a user to perceive the control state of the control device 500 and the lighting device 1, for example, a display device including a liquid crystal display (LCD) or an organic EL.

Note that, when the operation and display unit 503 is a touch panel, for example, the function as an operation unit and the function as a display unit are integrally realized. Note that the operation and display unit 503 may not have some functions as an operation unit or a display unit. The control device 500 is not limited to the control device 500 including the operation and display unit 503, and the control device 500 may not include the operation and display unit 503, and for example, the terminal 300 may realize the function as the operation and display unit 503 described above.

The control unit 502 realizes the control method of the lighting device 1 by the control device 500 performing following processing, by the MCU and the memory cooperating with each other to execute the program stored in the storage unit.

As illustrated in FIG. 3, in the lighting system 10, the position detection model A is a model trained in advance as a model for specifying a region (manned region) where a person is present among a plurality of detection regions D based on a detection result of the sensor 102, for each of the regions (detection regions D) having a predetermined size (area) obtained by dividing the lighting space 200 according to a detection unit by the sensor 102.

In FIG. 4, the position detection model A1 and the position detection model A2 specify manned regions M1 and M2 where persons P1 and P2 existing at different positions in the lighting space 200 are present.

As illustrated in FIG. 4, the control unit 502 of the control device 500 controls the irradiation states I1 and I2 to the irradiation targets O1 and O2 in the irradiation region based on the irradiation state data specifying the irradiation states of the lighting device 1 according to the position detection models A1 and A2. The irradiation region providing the irradiation state of the lighting device 1 controlled by control unit 502 is, for example, an area different from the manned regions where the persons P1 and P2 are present in the lighting space 200.

In FIG. 4, the irradiation state I1 is, for example, an irradiation state where the irradiation target O1 is irradiated with light from the lighting device 1. The irradiation state I2 is, for example, an irradiation state where the irradiation target O2 is irradiated with light from the lighting device 1. In FIG. 4, the irradiation states I1 and I2 are examples where the irradiation angle and the like are mainly controlled, but the irradiation state controlled by the irradiation state data is not limited to the irradiation states described above. The irradiation region of the lighting device 1 controlled by the control unit 502 may be a region including the manned regions M1 and M2 where the persons P1 and P2 are present in the lighting space 200.

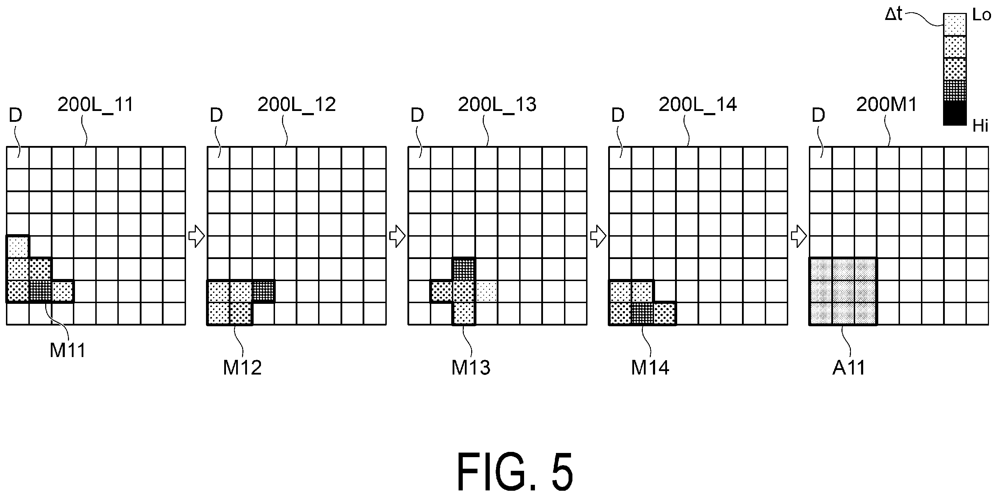

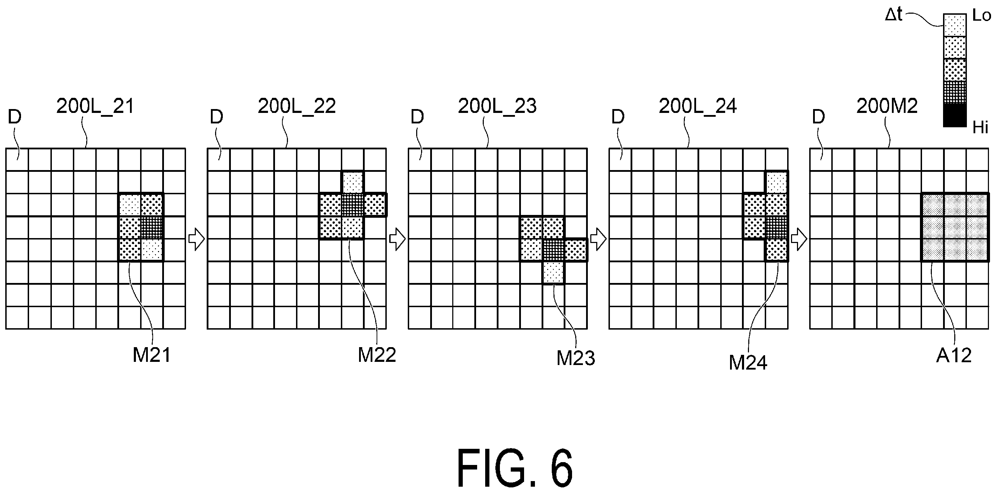

FIG. 5 is a schematic view illustrating an example of processing for generating the position detection model A11 by the control device 500. FIG. 6 is a schematic view illustrating another example of processing for generating a position detection model A12 by the control device 500.

Learning data 200L_11 to 14 illustrated in FIG. 5 and learning data 200L_21 to 24 illustrated in FIG. 6 indicate temperature changes occurring when a person is present at different positions in the lighting space 200. Position detection datum 200M1 illustrated in FIG. 5 and position detection datum 200M2 illustrated in FIG. 6 are data indicating that the position detection model A11 and the position detection model A12 in the lighting space 200 are specified based on the learning data 200L_11 to 14 and the learning data 200L_21 to 24.

The learning data 200L_11 to 14 are obtained by measuring, a plurality of times, a temperature change occurring when a person is present at the same position in the lighting space 200 a plurality of times. Similarly, the learning data 200L_21 to 24 are also obtained by measuring, a plurality of times, a temperature change occurring when a person is present at the same position in the lighting space 200. In the manned regions M11 to M14 and M21 to M24 of the learning data 200L_11 to 14 and 200L_21 to 24, a temperature change occurs compared to the other detection regions D due to the presence of a person within the range of the plurality of detection regions D in the lighting space 200 illustrated in FIG. 3. That is, the manned regions M11 to M14 and M21 to M24 of the learning data 200L_11 to 14 and 200L_21 to 24 indicate the presence or absence of a person and the position of the person in the lighting space 200 based on the temperature change of the detection region D detected by the sensor 102. Δt indicates the level (Hi-Lo) of the temperature change. Hereinafter, the processing for generating the position detection model A11 illustrated in FIG. 5 will be mainly described.

In the learning data 200L_11 to 14, although a person is present at the same position in the lighting space 200, a part of the detection regions D included in the respective manned regions M11 to M14 is different. In the learning data 200L_11 to 14, the values of the temperature changes occurring in the detection regions D included in the respective manned regions M11 to M14 are also different.

In the control device 500, the control unit 502 calculates information representing the weight of the temperature change for each of the detection regions D included in the manned regions M11 to M14 in the learning data 200L_11 to 14.

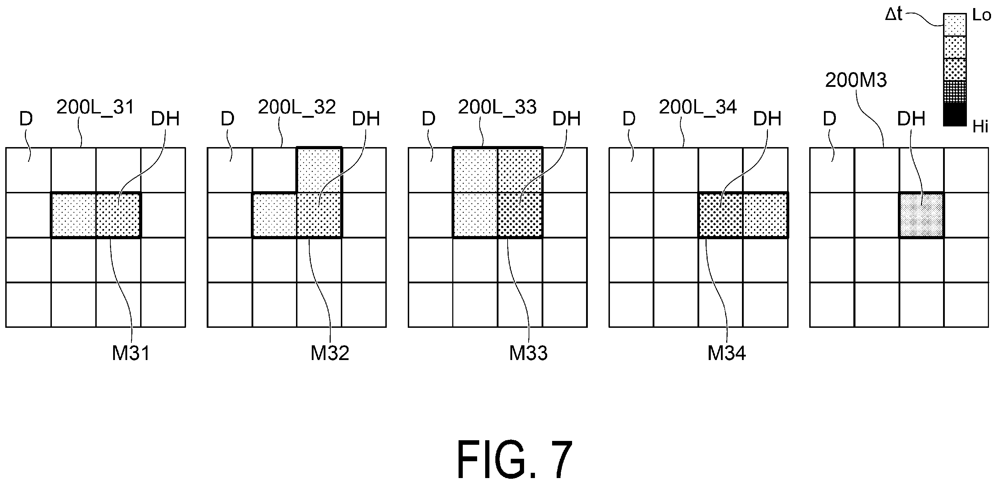

FIG. 7 is a schematic view illustrating an example of weighting processing of a position detection model performed by the control device 500.

As illustrated in FIG. 7, as for the information indicating the weight of the temperature change, for example, the control unit 502 can calculate the average value of the temperature changes Δt for each of the individual detection regions D included in each of manned regions M31 to M34 in learning data 200L_31 to 34, and generate position detection data 200M3 where a detection region DH having the highest average value is specified. The detection region DH having the highest average value in the position detection datum 200M3 corresponds to the position detection models A11 and A12 in the position detection data 200M1 and 200M2. That is, the control unit 502 can calculate the average value of the temperature changes Δt for each of the individual detection regions D included in the learning data 200L_31 to 34, and can use the detection region DH having the highest average value among the detection regions D as the position detection model.

As illustrated in FIG. 5, in the control device 500, the control unit 502 generates the position detection model A11 by associating the plurality of detection regions D included in the manned regions M11 to M14 with the information indicating the weight of the temperature change. The position detection model A11 is generated so as to include, for example, the detection regions D within a predetermined range including the detection region DH having the highest average value described above.

Similar to the processing for generating the position detection model A11 described above, the control unit 502 can also generate the position detection model A12 based on manned regions M21 to 24 of the learning data 200L_21 to 24 illustrated in FIG. 6. The number of position detection models can be set arbitrarily according to the number of associated irradiation state data.

The control unit 502 performs processing for associating the generated position detection models A11 and A12 with the irradiation state data specifying the irradiation state of the lighting device 1. The irradiation state data is stored in the storage unit of the control unit 502, for example, when a user inputs information for specifying the irradiation state from the operation and display unit 503. Any number of the irradiation state data can be stored according to the number of the position detection models A11 and A12. The control unit 502 stores the irradiation state data and the position detection models A11 and A12 in the storage unit in association with each other as in a data table, for example. Any number of irradiation state data can be stored according to the time zone. The control unit 502 stores the irradiation state data, the position detection models A11 and A12, and the time zones for executing the irradiation state data in the storage unit in association with each other as in a data table, for example.

The control unit 502 controls the irradiation states I1 and I2 to the irradiation regions as illustrated in FIG. 4 based on the irradiation state data associated with the position detection models A11 and A12. The control unit 502 may control the irradiation states I1 and I2 to the irradiation regions by changing the association between the position detection models A11 and A12 and the irradiation state data in accordance with the time zone.

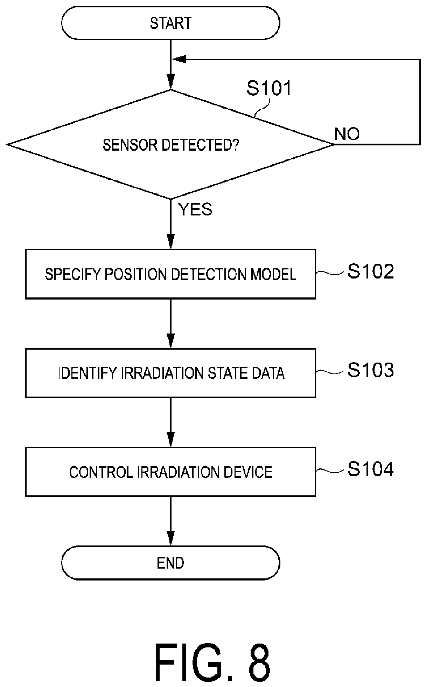

FIG. 8 is a flowchart illustrating an example of a lighting control method executed by the control device 500.

As illustrated in FIG. 8, in the lighting system 10, when the control device 500 and the lighting device 1 are powered on, the control unit 502 of the control device 500 determines whether or not a detection result of a temperature change is output from the sensor 102 of the sensor device 100, that is, whether or not the presence of a person is detected (step S101). When the sensor 102 does not detect a person (S101: NO), the control unit 502 repeats the processing of S101.

If the sensor 102 detects a person (S101: YES), the control unit 502 specifies, according to the detection result of the temperature change in the plurality of detection regions D of the lighting space 200 acquired from the sensor 102, a position detection model with manned regions learned in advance as the manned regions M1 and M2 where the persons P1 and P2 are present among the plurality of detection regions D (step S102).

The control unit 502 specifies the irradiation state data associated with the position detection model specified by S102 based on the information stored in the storage unit (step S103). The control unit 502 controls the irradiation state of the irradiation region based on the irradiation state data specified by S103 (step S104).

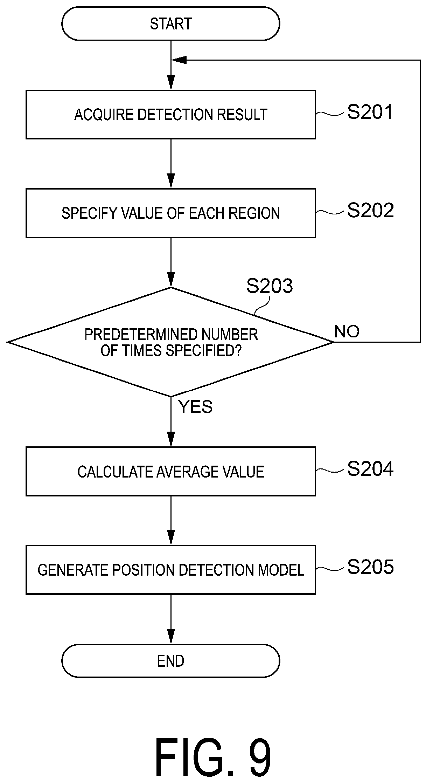

FIG. 9 is a flowchart illustrating an example of processing for generating a position detection model executed by the lighting control device according to the embodiment.

As illustrated in FIG. 9, in the lighting system 10, when the control device 500 and the lighting device 1 are powered on and the control unit 502 of the control device 500 starts the processing for generating the position detection model, the detection result of the temperature change is acquired from the sensor 102 of the sensor device 100 (step S201). Note that, for example, a trigger signal is transmitted from the terminal 300 to the sensor device 100, and the processing for generating the position detection model is started when the sensor device 100 receives the trigger signal.

The control unit 502 specifies the value of the temperature change occurring in the detection region D included in each of the manned regions M11 to 14 of each of the learning data 200L_11 to 14 from the date acquired from the sensor 102 (step S202).

The control unit 502 determines whether or not the learning data 200L_11 to 14 where the value of the temperature change is specified can be acquired from the sensor 102 a predetermined number of times (step S203). When the number of times does not reach the predetermined number of times (S203: NO), the control unit 502 repeats the processing of S201 and the processing of S202.

When the predetermined number of times is reached (S203: YES), the control unit 502 calculates the average value of the temperature changes Δt for each of the individual detection regions D included in each of the manned regions M31 to M34 in the learning data 200L_11 to 14, and specifies the detection region DH having the highest average value among the detection regions D (step S204).

The control unit 502 generates the position detection model A11 by associating the plurality of detection regions D included in the manned regions M11 to M14 with the information indicating the weight of the temperature change (step S205).

### 3. Effects of Embodiment

The lighting system 10 configured as described above includes the lighting device 1 configured to adjust an irradiation state including at least one of an irradiation direction or a focal length and irradiating an irradiation region with light, the control device 500 controlling the irradiation state of the lighting device 1, and the sensor 102 detecting the presence or absence of the person P1 or the person P2 in each of the plurality of detection regions D. In the lighting system 10, the control device 500 specifies the irradiation state data specifying the irradiation states I1 and I2 corresponding to the position detection models A1 and A2 based on the detection result of the sensor 102 and the position detection models A1 and A2 where the manned regions M1 and M2 where the persons P1 and P2 exist among the plurality of detection regions D are learned in advance, and controls the irradiation states I1 and I2 to the irradiation regions based on the irradiation state data.

The lighting system 10 configured as described above can improve, by learning the position detection models A1 and A2 in advance in the technique of detecting the presence or absence of a person in the lighting space and controlling the irradiation direction, the light amount, and the like of the lighting device, the detection accuracy of the position of the person and perform control more suited for the situation even when a difference occurs in the detection results of the persons P1 and P2 by the sensor 102.

Therefore, the lighting system 10 can control the lighting device more suited for the situation by increasing the detection accuracy of the position of the person.

The manned regions M1 and M2 may include a region different from the irradiation region. In this way, for example, in the lighting device 1 irradiating the irradiation targets O1 and O2, such as an exhibit or a fixture in the lighting space 200 such as a shop or an exhibition hall, the irradiation state such as the irradiation angle, the focal length, the light distribution angle, the light color (including the color temperature), and the brightness to the irradiation targets O1 and O2 can be changed depending on the positions of the persons P1 and P2 viewing the irradiation targets O1 and O2. That is, according to the lighting system 10, it is possible to expect an eye-catching effect and a light stage effect on the irradiation target depending on the presence or absence of the persons P1 and P2 and the difference in position.

In the lighting system 10, the sensor 102 detects the presence or absence of the person P1 or P2 in each of the plurality of detection regions D, for example, based on a temperature change. The manned regions M1 and M2 may include a plurality of detection regions D, and the control device 500 may calculate information indicating a weight of a temperature change for each of the plurality of detection regions D included in the manned regions M1 and M2, and generate a position detection model by associating the plurality of detection regions included in the manned regions with the information indicating the weight of the temperature change.

The control device 500 may calculate an average value of the temperature change for each of the plurality of detection regions included in the manned regions, and calculate the information indicating the weight of the temperature change based on the average value.

The lighting system 10 configured as described above can further improve, by using information on a temperature change in the manned regions acquired a plurality of times in learning the position detection models A1 and A2 are learned in advance in the technique of detecting the presence or absence of a person in the lighting space and controlling the irradiation direction, the light amount, and the like of the lighting device, the detection accuracy of the position of the person and perform control more suited for the situation even when a difference occurs in the detection results of the persons P1 and P2 by the sensor 102,.

Therefore, he lighting system 10 can control the lighting device more suited for the situation by increasing the detection accuracy of the position of the person.

The irradiation state may include any of a light distribution angle, brightness, and a light color.

In addition, a person skilled in the art can appropriately modify the present invention according to conventionally known knowledge. Such modifications are of course included in the scope of the present invention as long as these modifications still include the configuration of the present invention.

For example, when the sensor 102 is an infrared sensor receiving infrared rays to convert the infrared rays into an electric signal, there are mainly known a thermal sensor detecting an electric property changing due to heat of the infrared rays and a quantum sensor detecting an electric phenomenon due to light energy, but the operation principle is not particularly limited.

For example, the sensor 102 is not limited to the infrared sensor, and may be, for example, an ultrasonic sensor, a microwave sensor, an image recognition sensor, or the like.

The information indicating the weight of the temperature change may be calculated based on whether or not the cumulative value of the temperature change of each of the individual detection regions included in the manned region exceeds a predetermined threshold value, for example. The information indicating the weight of the temperature change may be calculated in descending order of the cumulative value described above, for example. The information indicating the weight of the temperature change may be obtained by considering, for example, the number of times that each of the individual detection regions is included in the manned region.

When the control device 500 generates the position detection model by associating the plurality of detection regions included in the manned regions with the information indicating the weight of the temperature change, the position detection model may be generated to include, for example, the detection region D where the cumulative value described above exceeds a predetermined threshold value or a plurality of detection regions within a predetermined range centered on the detection region where the cumulative value described above is the highest.

The lighting system 10 may be a system not including the control device 500 independently. The control device 500 may be incorporated in the lighting device 1 or may be incorporated in the sensor device 100. For example, when the control device 500 is incorporated in the lighting device 1, the position detection model and the irradiation state data may be stored in the storage unit of the lighting device 1, and the information detected by the sensor 102 may be received by wireless communication to control the irradiation state to the irradiation region. For example, when the control device 500 is incorporated in the sensor device 100, the position detection model and the irradiation state data may be stored in the storage unit of the sensor device 100, and the information detected by the sensor 102 may be transmitted to the lighting device 1 by wireless communication to control the irradiation state to the irradiation region.

### Reference Signs List

1 Lighting device, 2 Body part, 5 Control circuit, 10 Lighting system, 21 Casing, 22 Lens, 23 Base part, 24 Arm, 100 Sensor device, 101 Communication unit, 102 Sensor, 200 Lighting space, 200L_11 to 14, 200L_21 to 24, 200L_31 to 34 Learning data, 200M1, 200M2, 200M3 Position detection data, 300 Terminal, 500 Control device, 501 Communication unit, 502 Control unit, 503 Operation and display unit, A, A1, A11, A12, A2 Position detection model, D, DH Detection region, F Focus, I1, I2 Irradiation state, L Irradiation angle, M1, M11, M12, M13, M14, M2, M21, M22, M23, M24, M31, M32, M33, M34 Manned region, Mf Focus motor, Mp Pan motor, Mt Tilt motor, O1, O2 Irradiation target, P Pan, P1, P2 Person, T Tilt, Δt Temperature change

## Claims

1. A lighting system (10), comprising:
a lighting device (1) configured to adjust an irradiation state including at least one of an irradiation direction or a focal length and irradiate an irradiation region with light;
a control device (500) configured to control the irradiation state of the lighting device; and
a sensor (102) configured to detect presence or absence of a person in each of a plurality of detection regions, wherein
the control device (500)
specifies, based on a detection result of the sensor (102) and a position detection model (A) with a manned region learned in advance as a region where a person is present among the plurality of the detection regions, irradiation state data specifying the irradiation state corresponding to the position detection model learned in advance and
controls the irradiation state to the irradiation region based on the irradiation state data.

2. The lighting system (10) according to claim 1, wherein the manned region includes a region different from the irradiation region.

3. The lighting system (10) according to claim 1 or 2, wherein
the sensor (102) detects presence or absence of a person in each of the plurality of the detection regions based on a temperature change(Δt),
the manned region includes a plurality of the detection regions, and
the control device (500)
calculates information indicating a weight of the temperature change for each of the plurality of the detection regions included in the manned region and
generates the position detection model by associating the plurality of the detection regions included in the manned region with the information indicating the weight of the temperature change (Δt).

4. The lighting system (10) according to any one of claim 1 to 3, wherein
the control device (500)
calculates an average value of the temperature change (Δt) for each of the plurality of the detection regions included in the manned region and
calculates the information indicating the weight of the temperature change (Δt) based on the average value.

5. The lighting system (10) according to any one of claims 1 to 4, wherein the irradiation state includes any one of a light distribution angle, brightness, and a light color.

6. A method for controlling a lighting device (1), the method comprising
controlling, by a control device (500), an irradiation state including at least one of an irradiation direction or a focal length of a lighting device (1) configured to adjust the irradiation state and irradiate an irradiation region with light,
wherein the control device (500) specifies, based on a detection result of presence or absence of a person in each of a plurality of detection regions of a sensor (102) and a position detection model (A) with a manned region learned in advance as a region where a person is present among the plurality of the detection regions, irradiation state data specifying the irradiation state corresponding to the position detection model and
controls the irradiation state to the irradiation region based on the irradiation state data.

7. A lighting control device for controlling a lighting device (1) configured to adjust an irradiation state including at least one of an irradiation direction or a focal length and irradiate an irradiation region with light, wherein
the control device (500)
specifies, based on a detection result of presence or absence of a person in each of a plurality of detection regions of a sensor and a position detection model (A) with a manned region learned in advance as a region where a person is present among the plurality of the detection regions, irradiation state data identifying the irradiation state corresponding to the position detection model and
controls the irradiation state to the irradiation region based on the irradiation state data.
